# EUROPÄISCHE PATENTSCHRIFT

(11) **EP 2 544 909 B1**
(45) Veröffentlichungstag und Bekanntmachung des Hinweises auf die Patenterteilung: **30.04.2014**
(21) Anmeldenummer: 11767627.0
(22) Anmeldetag: 21.09.2011
(51) Int. Cl.: B60K 6/48, B60W 20/00, B60W 10/06, B60W 10/08, B60W 10/02

(54) **ANTRIEBSVORRICHTUNG**
DRIVE DEVICE
DISPOSITIF DE PROPULSION

(30) Priorität: 22.09.2010 DE 102010046048
(43) Veröffentlichungstag der Anmeldung: 16.01.2013
(73) Patentinhaber: Voith Patent GmbH, 89522 Heidenheim (DE)
(72) Erfinder: BURR, Ulrich, 89073 Ulm (DE)
(74) Vertreter: Dr. Weitzel & Partner
(86) Internationale Anmeldenummer: PCT/EP2011/004721
(87) Internationale Veröffentlichungsnummer: WO 2012/038078

(56) Entgegenhaltungen:
- JP-A- 2000 203 287
- US-A1- 2004 040 810
- US-A1- 2008 300 082

## Beschreibung

Die Erfindung betrifft eine Antriebsvorrichtung mit den im Oberbegriff von Anspruch 1 genannten Merkmalen.

Vergleichbare Antriebsvorrichtungen sind beispielsweise aus der DE 10 2007 001 840 A1 oder der US 2004/0040810 A1 bekannt. Derartige Antriebsvorrichtungen mit einer Verbrennungskraftmaschine und einer Elektromaschine, welche über eine Getriebeeinrichtung beispielsweise eine Arbeitsmaschine oder ein Fahrzeug antreiben, werden häufig auch als Hybrid-Antriebsvorrichtungen bezeichnet. Solche Antriebsvorrichtungen können insbesondere zum Antreiben von Kraftfahrzeugen, beispielsweise Nutzfahrzeugen, Schienenfahrzeugen, aber auch zum Antreiben von Schiffen und mobilen oder nicht mobilen Arbeitsmaschinen, wie zum Beispiel Kranen oder dergleichen eingesetzt werden. Die im genannten Stand der Technik beschriebenen Antriebsvorrichtungen weisen dabei parallele Drehachsen der Verbrennungskraftmaschine und der Elektromaschine auf. Beide Aufbauten zeigen dabei die Elektromaschine neben einer Getriebeeinrichtung, insbesondere um die Verbrennungskraftmaschine selbst nicht modifizieren zu müssen.

Häufig ist es bei der Auslegung von Antriebsvorrichtungen jedoch gewünscht, ein über eine Antriebsmaschine angefordertes Drehmoment bereitzustellen und dieses über die Getriebeeinrichtung beispielsweise an eine Arbeitsmaschine oder an die angetriebenen Räder eines Kraftfahrzeugs weiterzugeben, ohne im Bereich der Getriebeeinrichtung oder danach entsprechende Modifikationen vorzunehmen.

Das Dokument EP 1 253 036 A1 beschreibt einen im Wechselgetriebe eines Kraftfahrzeugs, vorliegend als Getriebeeinrichtung bezeichnet, integrierten Elektromotor, der koaxial zur Kurbelwelle des Verbrennungsmotors angeordnet ist.

Das Dokument DE 10 2007 058 528 A1 beschreibt eine Triebstranganordnung eines Fahrzeugs mit einer Verbrennungskraftmaschine, einer elektrischen Maschine, einem Getriebe (Wechselgetriebe) und einer Kraftübertragungseinheit, wobei die Kraftübertragungseinheit einen hydrodynamischen Drehmomentwandler aufweist, dessen Abtriebsseite in einer Wirkverbindung mit der Verbrennungskraftmaschine steht. Der Rotor der elektrischen Maschine und die Kurbelwelle der Verbrennungskraftmaschine sind wiederum koaxial zueinander angeordnet.

Die Offenlegungsschrift DE 10 2009 022 275 A1 beschreibt eine in ein Getriebe integrierte elektrische Maschine, deren Rotor ebenfalls koaxial zur Kurbelwelle des Verbrennungsmotors positioniert ist.

Gemäß der Offenlegungsschrift DE 42 25 315 A1 ist die elektrische Maschine innerhalb des Getriebes, nämlich hinter dem hydrodynamischen Wandler, angeschlossen.

Das Dokument DE 195 05 027 C1 beschreibt einen Parallelhybridantrieb mit einer elektrischen Maschine, die erneut koaxial zum Verbrennungsmotor positioniert ist.

Das Dokument US 2004/0040810 A1 beschreibt eine als Motorgenerator ausgebildete elektrische Maschine, welche in mechanischer Triebverbindung mit der Getriebeeingangswelle steht.

DE 11 2008 002 644 T5 beschreibt mehrere im Getriebe integrierte elektrische Maschinen.

Es ist die Aufgabe der hier vorliegenden Erfindung, eine Antriebsvorrichtung mit den Merkmalen im Oberbegriff des Anspruchs 1 dahingehend weiterzubilden, dass eine universelle Antriebsmaschine entsteht, welche an einer Abtriebswelle ein vorgegebenes Drehmoment energieeffizient bereitstellen kann.

Erfindungsgemäß wird diese Aufgabe durch eine Antriebsvorrichtung mit den Merkmalen des Anspruchs 1 gelöst. Ferner löst ein Verfahren zum Betreiben einer solchen Vorrichtung mit den Merkmalen im Anspruch 10 diese Aufgabe. Vorteilhafte Ausgestaltungen der Antriebsvorrichtung beziehungsweise des Verfahrens ergeben sich aus den jeweils abhängigen Unteransprüchen.

Erfindungsgemäß sind demnach der Rotor der elektrischen Maschine und die Kurbelwelle der Verbrennungskraftmaschine nicht koaxial oder konzentrisch zueinander positioniert, sondern die Drehachsen derselben sind parallel nebeneinander, das heißt in Richtung der Drehachse gesehen mit Abstand zueinander angeordnet. Dies ermöglicht beispielsweise die elektrische Maschine neben der Verbrennungskraftmaschine oder neben der Getriebeeinrichtung, die insbesondere als Wechselgetriebe, beispielsweise Schaltgetriebe, automatisiertes Schaltgetriebe oder Automatgetriebe ausgeführt ist, zu positionieren, ohne dass die axiale Baulänge der Antriebsvorrichtung länger wird.

Die erfindungsgemäße Antriebsvorrichtung verbindet die Verbrennungskraftmaschine und die Elektromaschine beziehungsweise deren Abtriebswellen miteinander, sodass diese eine gemeinsame Abtriebswelle aufweisen, welche dann mit einer Eingangswelle der Getriebeeinrichtung verbunden oder verbindbar ist. Zwischen der Rotorwelle der Elektromaschine und der gemeinsamen Abtriebswelle ist erfindungsgemäß außerdem eine hydrodynamische Kupplung angeordnet. Über ein Getriebeelement, beispielsweise ein Stirnradgetriebe, wird eine Verbindung zwischen der gemeinsamen Abtriebswelle und der Kurbelwelle der Verbrennungskraftmaschine einerseits und der Rotorwelle der Elektromaschine andererseits geschaffen. Da bei einer Verbrennungskraftmaschine, und hier insbesondere wenn diese als Dieselmotor ausgebildet ist, Drehschwingungen nicht gänzlich zu vermeiden sind, besteht bei einer drehfesten Kopplung der Kurbelwelle mit der Rotorwelle der Elektromaschine über das Getriebeelement die Gefahr, dass die elektrische Maschine durch diese Drehschwingungen entsprechend beeinflusst, in ihrem Wirkungsgrad verschlechtert oder gegebenenfalls sogar geschädigt wird. Da beim erfindungsgemäßen Aufbau zwischen der gemeinsamen Abtriebswelle und der Elektromaschine jedoch eine hydrodynamische Kupplung eingesetzt ist, kann die Elektromaschine von den Drehschwingungen entkoppelt werden. Dies hat den entscheidenden Vorteil, dass Verbrennungskraftmaschine und Elektromaschine auf eine gemeinsame Abtriebswelle wirken können und so durch die Addition der Leistung an der Verbrennungskraftmaschine und der Elektromaschine eine annähernd beliebige Kennlinie an der gemeinsamen Abtriebswelle dieser integrierten, universellen Antriebseinheit aus Verbrennungskraftmaschine und Elektromaschine eingestellt werden kann. Damit kann eine annähernd beliebige Kennlinie bereitgestellt werden, ohne unerwünschte Knicke, Dellen oder dergleichen, welche in der Kennlinie der Verbrennungskraftmaschine bei bestimmten Drehzahlen auftreten können.

Die gemeinsame Abtriebswelle kann dann direkt oder über geeignete Kupplungselemente mit einer Getriebeeinrichtung verbunden sein, welche dann wieder beispielsweise ein Fahrzeug, eine Arbeitsmaschine oder ähnliches antreibt.

Wenn durch die erfindungsgemäße Antriebsvorrichtung beispielsweise ein Fahrzeug angetrieben wird, so kann die Getriebeeinrichtung ein manuelles, automatisiertes oder automatisches Schaltgetriebe, ein Differentialwandlergetriebe oder ähnliches sein.

In einer besonders vorteilhaften Weiterbildung der erfindungsgemäßen Antriebsvorrichtung ist es dabei vorgesehen, dass zwischen der gemeinsamen Abtriebswelle und der Eingangswelle der Getriebeeinrichtung ein Drehschwingungsdämpfer angeordnet ist. Da die Verbrennungskraftmaschine typischerweise Drehschwingungen erzeugt, insbesondere wenn diese als Dieselmotor ausgebildet ist, kann ein solcher Drehschwingungsdämpfer zwischen der gemeinsamen Abtriebswelle und der Eingangswelle der Getriebeeinrichtung von entscheidendem Vorteil sein, da dieser die Drehschwingungen von der Getriebeeinrichtung fern hält. Die Drehschwingungen treten dann in dem System zwischen der Verbrennungskraftmaschine und dem Drehschwingungsdämpfer einerseits und zwischen der Verbrennungskraftmaschine und der über das Getriebeelement angekoppelten Elektromaschine beziehungsweise dem Bereich zwischen der hydrodynamischen Kupplung und der gemeinsamen Abtriebswelle auf. Sowohl die Elektromaschine als auch die Getriebeeinrichtung sind bei diesem besonders bevorzugten Aufbau der Antriebsvorrichtung von Drehschwingungen gänzlich entkoppelt.

In einer besonders vorteilhaften Weiterbildung der erfindungsgemäßen Antriebsvorrichtung kann es dabei vorgesehen sein, dass die hydrodynamische Kupplung als hydrodynamische Kupplung mit variablem Füllstand ausgebildet ist. Dies ermöglicht es durch eine entsprechende Regelung des Füllstands die Kraftübertragung zwischen der Elektromaschine und dem Getriebeelement beziehungsweise zwischen dem Getriebeelement und der Elektromaschine, wenn diese generatorisch betrieben wird, entsprechend einzustellen und zu regeln. Bei einer vollständigen Entleerung der hydrodynamischen Kupplung lässt sich hier außerdem ein Abkoppeln der elektrischen Maschine erreichen, sodass diese beispielsweise, wenn die gesamte benötigte Leistung beziehungsweise das gesamte benötigte Drehmoment ausschließlich durch die Verbrennungskraftmaschine bereitgestellt wird, nicht mitgeschleppt werden muss, und so Verluste vermieden werden.

Ergänzend oder alternativ hierzu kann es in einer vorteilhaften Weiterbildung der erfindungsgemäßen Antriebsvorrichtung ferner vorgesehen sein, dass die Elektromaschine als Asynchronmaschine ausgebildet ist. Dann ist es möglich, diese durch Abmagnetisieren verlustfrei umlaufen zu lassen. In diesem Fall kann auf eine vollständige Entleerung der hydrodynamischen Kupplung, wie es gemäß der oben beschriebenen Variante denkbar und möglich ist, gänzlich verzichtet werden.

In einer weiteren Ausgestaltung des erfindungsgemäßen Aufbaus ist es außerdem vorgesehen, dass die hydrodynamische Kupplung eine mechanische Überbrückungskupplung aufweist. Eine solche mechanische Überbrückungskupplung kann in bestimmten Situationen, in denen keine Drehschwingungen auftreten, beispielsweise wenn die Verbrennungskraftmaschine abgeschaltet ist, eingesetzt werden, um Leistungsverluste bei der Übertragung der Leistung von der elektrischen Maschine auf die Getriebeeinrichtung oder umgekehrt zu minimieren.

Das erfindungsgemäße Verfahren zum Betreiben einer solchen erfindungsgemäßen Antriebsvorrichtung sieht es dabei vor, dass aus einem angeforderten Drehmoment, welches beispielsweise im Falle eines Fahrzeugs durch den Nutzer des Fahrzeugs und die Gaspedalstellung angefordert wird, oder welches im Falle einer Arbeitsmaschine durch diese beziehungsweise einen vorgegebenen Betriebszustand angefordert wird, ein Soll-Eingangsdrehmoment für die Getriebeeinrichtung bestimmt wird. Dieses Soll-Eingangsdrehmoment lässt sich anhand eines Getriebesteuergeräts aus dem bekannten Übertragungsverhalten des Getriebes in an sich bekannter Art herleiten, und berechnen, einem Kennfeld entnehmen oder dergleichen. Das erfindungsgemäße Verfahren sieht dann ferner vor, dass die Verbrennungskraftmaschine und die Elektromaschine dieses Soll-Eingangsdrehmoment gemeinsam liefern, sofern dieses kleiner als ein maximal mögliches Drehmoment ist, wobei die Aufteilung von geliefertem Drehmoment zwischen der Elektromaschine und der Verbrennungskraftmaschine frei wählbar ist. Der Betrieb der Elektromaschine und der Verbrennungskraftmaschine, welche vom Rest des Antriebsstrangs lediglich als integrierte Antriebseinheit mit einer einzigen Abtriebswelle, nämlich der gemeinsamen Abtriebswelle, gesehen werden, ist zur Erzeugung des Soll-Eingangsdrehmoments für die Getriebeeinrichtung nicht relevant. Für die Getriebeeinrichtung und die nachfolgenden Komponenten ist es lediglich wichtig, dass dieses Soll-Eingangsdrehmoment bereitgestellt wird. Die Aufteilung bei der Erzeugung des Soll-Eingangsdrehmoments zwischen der Elektromaschine und der Verbrennungsmaschine ist somit frei wählbar.

Gemäß einer besonders günstigen und vorteilhaften Weiterbildung des erfindungsgemäßen Verfahrens ist es dabei vorgesehen, dass die Aufteilung wenigstens mittelbar in Abhängigkeit wenigstens eines der Parameter
- Speicherinhalt einer elektrischen Energiespeichereinrichtung für die Elektromaschine;
- Dynamik der Drehmoment-Anforderung
- Wirkungsgradkennfeld der Verbrennungskraftmaschine und/oder der elektrischen Maschine;
- Anforderungen an Schadstoff- und/oder Geräuschemissionen;
- Angefordertes Bremsmoment;
entsprechend eingestellt wird. Da beispielsweise die Elektromaschine, ausreichenden Speicherinhalt einer elektrischen Energiespeichereinrichtung vorausgesetzt, schneller ein Drehmoment bereitstellen kann als die Verbrennungskraftmaschine, kann bei sehr dynamischen Anforderungen ein Großteil des geforderten Drehmoments nach Möglichkeit über die Elektromaschine bereitgestellt werden oder zumindest solange bereitgestellt werden, bis die Verbrennungskraftmaschine die erforderliche Drehzahl und das erforderliche Drehmoment erreicht hat. Ansonsten lässt sich die Aufteilung beliebig variieren, insbesondere in Abhängigkeit eines Speicherinhalts der elektrischen Energiespeichereinrichtung, um beim Abbremsen über die Elektromaschine als Generator rekuperierte Energie möglichst ideal zu nutzen und damit den Gesamtenergiebedarf der erfindungsgemäßen Antriebsvorrichtung zu minimieren.

Weitere vorteilhafte Ausgestaltungen der erfindungsgemäßen Antriebsvorrichtung ergeben sich außerdem aus dem Ausführungsbeispiel, welches nachfolgend unter Bezugnahme auf die Figuren näher beschrieben wird.

Dabei zeigen:
- Fig. 1: eine erste mögliche Ausführungsform der erfindungsgemäßen Antriebsvorrichtung;
- Fig. 2: eine zweite mögliche Ausführungsform der erfindungsgemäßen Antriebsvorrichtung.

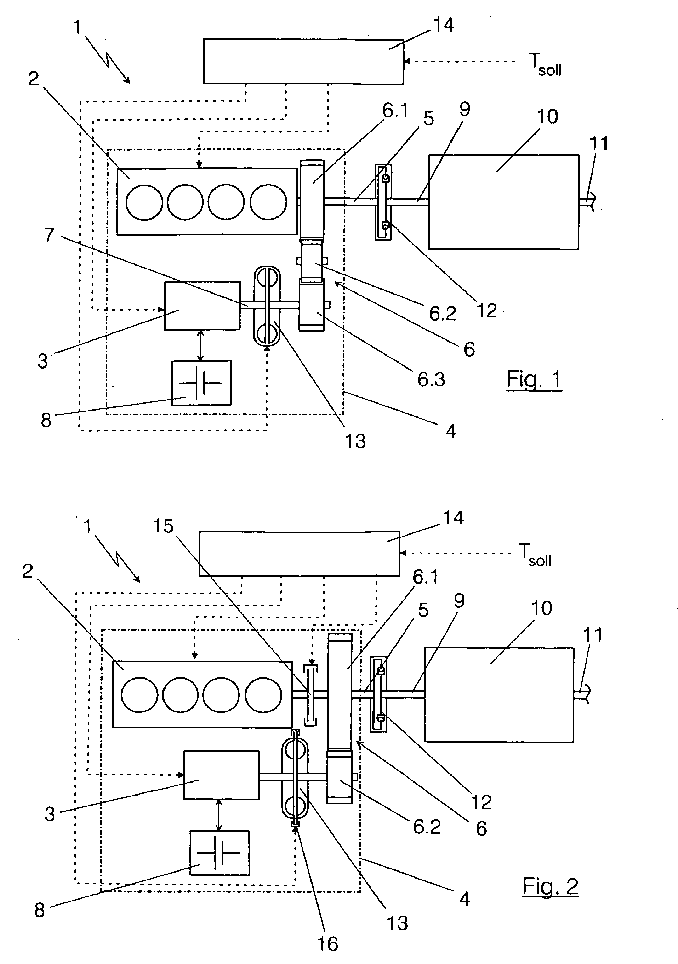

In der Darstellung der Figur 1 ist eine Antriebsvorrichtung 1 zu erkennen, welche eine Verbrennungskraftmaschine 2, insbesondere einen Dieselmotor, und eine elektrische Maschine 3, insbesondere eine Asynchronmaschine, aufweist. Die Verbrennungskraftmaschine 2 und die elektrische Maschine 3 bilden zusammen eine Antriebseinheit 4, welche in der Darstellung der Figur 1 mit einer strichpunktierten Linie umrandet ist. Diese Antriebseinheit 4 weist eine einzige Abtriebswelle 5 auf, welche als gemeinsame Abtriebswelle der Verbrennungskraftmaschine 2 und der elektrischen Maschine 3 zu sehen ist. Die gemeinsame Abtriebswelle 5 ist dabei über ein Getriebeelement 6 mit einer Kurbelwelle der Verbrennungskraftmaschine 2 und einer Rotorwelle der Elektromaschine 3 verbunden. Die Kurbelwelle der Verbrennungskraftmaschine 2 ist dabei nicht explizit dargestellt, die Rotorwelle der Elektromaschine 3 ist mit dem Bezugszeichen 7 versehen. Rein beispielhaft ist das Getriebeelement 6 dabei in Form von drei einzelnen Zahnrädern mit Stirnverzahnung ausgebildet, welche in der Darstellung der Figur 1 mit 6.1, 6.2 und 6.3 bezeichnet sind. Das mit 6.1 bezeichnete Zahnrad kann dabei gleichzeitig das Schwungrad der Verbrennungskraftmaschine 2 sein, welches über eine Außenverzahnung verfügt und mit dem zweiten Zahnrad 6.2 des Getriebeelements 6 entsprechend kämmt. Neben der Ausbildung des Getriebeelements 6 durch zwei oder mehr Zahnräder 6.1, 6.2, 6.3 könnte es alternativ oder ergänzend auch vorgesehen sein, Riementriebe, Kettentriebe, Kegelräder oder dergleichen einzusetzen. Typische Drehzahlverhältnisse zwischen der Elektromaschine 3 und der Verbrennungskraftmaschine 2 liegen dabei in einem Bereich von 1,4 bis 4, sodass also die Elektromaschine 3 um das 1,4-fache bis 4-fache schneller dreht als die Verbrennungskraftmaschine 2. Typische Leistungsbereiche können insbesondere so angedacht sein, dass die Elektromaschine 3 eine Leistung in der Größenordnung von 0,1 bis 1 der Leistung der Verbrennungskraftmaschine 2 aufweist.

Alternativ zu den hier dargestellten Ausführungsbeispielen wäre es auch denkbar, dass die Elektromaschine 3 auf der anderen Seite der Kurbelwelle der Verbrennungskraftmaschine 2 angekoppelt ist und die entsprechenden Leistungen dann durch die Kurbelwelle als gemeinsame Antriebswelle 5 übertragen werden. Die in den Figuren dargestellte abtriebsseitige Einkopplung der Elektromaschine 3 ist also rein beispielhaft zu verstehen.

Die Elektromaschine 3 ist in der Darstellung der Figur 1 rein beispielhaft angedeutet mit einer elektrischen Energiespeichereinrichtung 8, beispielsweise einer elektrochemischen Batterie und/oder einem elektrischen Energiespeicher mit Hochleistungskondensatoren verbunden. In der elektrischen Energiespeichereinrichtung 8 kann bei Bedarf, wenn die Elektromaschine 3 als Generator betrieben wird, elektrische Energie gespeichert werden, was insbesondere während eines Abbremsen der Antriebsvorrichtung 1, beispielsweise beim Abbremsen eines Fahrzeugs, falls die Antriebsvorrichtung 1 ein Fahrzeug antreibt, der Fall sein wird. Außerdem kann über die elektrische Energiespeichereinrichtung 8, in den Situationen in denen der Elektromotor 3 motorisch betrieben wird, diesem die erforderliche elektrische Leistung zur Verfügung gestellt werden. Die elektrische Energiespeichereinrichtung 8 kann dabei nicht nur über ein Abbremsen der Antriebsvorrichtung 1, sondern auch über andere Maßnahmen elektrisch geladen werden, beispielsweise über die zeitweise Anbindung an ein elektrisches Netz oder ähnliches.

Die gemeinsame Abtriebswelle 5 ist mit einer Eingangswelle 9 einer Getriebeeinrichtung 10 verbunden, welche dann eine Arbeitsmaschine antreibt oder zum Antrieb eines Fahrzeugs, beispielsweise eines Nutzfahrzeugs, eines Schienenfahrzeugs oder dergleichen dienen kann. Die Getriebeeinrichtung 10 kann dabei in beliebiger Art und Weise ausgebildet sein. Insbesondere wenn die Antriebsvorrichtung 1 zum Antreiben eines Fahrzeugs eingesetzt wird, wird die Getriebeeinrichtung 10 typischerweise als Gangwechselgetriebe, welches entweder manuell, automatisiert oder automatisch geschaltet wird, ausgebildet sein. In einer besonders bevorzugten Ausführungsform bei der Verwendung der Antriebsvorrichtung 1 für ein Fahrzeug ist die Getriebeeinrichtung 10 dabei als Differentialwandler-Getriebe ausgebildet, welches einen hydrodynamischen Wandler aufweist und einen mechanischen Leistungszweig und einen über den hydrodynamischen Wandler verlaufenden Leistungszweig hat. Im Betriebsfall der Getriebeeinrichtung 10 kann dann je nach Bedarf entweder der eine oder der andere oder beide der Leistungszweige genutzt werden, je nachdem was für Anforderungen an Drehzahl und Drehmoment im Bereich einer Ausgangswelle 11 der Getriebeeinrichtung 10 vorliegen.

Typischerweise verursacht die Verbrennungskraftmaschine 2 Drehschwingungen, insbesondere dann, wenn diese als Dieselmotor ausgebildet ist. Aus dem allgemeinen Stand der Technik ist es daher bekannt, einen Drehschwingungsdämpfer 12 in den Bereich zwischen der gemeinsamen Abtriebswelle 5 und der Eingangswelle 9 des Getriebes zu integrieren. In dem hier dargestellten Ausführungsbeispiel ist dieser Drehschwingungsdämpfer 12 beispielhaft angedeutet. Er kann beispielsweise über entsprechende Federelemente und eine hydraulische Dämpfung verfügen. Alternativ dazu wäre es auch denkbar, einen Drehschwingungsdämpfer zu verwenden, welcher lediglich über Federelemente die Antriebsseite mit der Abtriebsseite koppelt und so Antriebsleistung übertragen kann, ohne Drehschwingungen mit zu übertragen.

In der Antriebseinheit 4, welche die Verbrennungskraftmaschine 2 und die Elektromaschine 3 umfasst, liegt nun im Wesentlichen eine drehfeste Kopplung dieser beiden Maschinen 2, 3 über das Getriebeelement 6 vor. Ohne weitere Maßnahmen würden daher die von der Verbrennungskraftmaschine 2 erzeugten Drehschwingungen über das Getriebeelement 6 in den Bereich der Elektromaschine 3 eingeleitet und würden hier zu erheblichen Problemen führen. Diese Problematik wird bei dem hier dargestellten Aufbau dadurch umgangen, dass zwischen der gemeinsamen Abtriebswelle 5 und der Rotorwelle 7 der Elektromaschine 3 beziehungsweise im Bereich zwischen der Rotorwelle 7 und dem Getriebeelement 6 eine hydrodynamische Kupplung 13 vorgesehen ist. Diese hydrodynamische Kupplung 13 sorgt einerseits für eine Übertragung des gewünschten Drehmoments von der Rotorwelle 7 der elektrischen Maschine 3 in den Bereich der gemeinsamen Abtriebswelle 5 oder umgekehrt, je nach Betriebszustand, und sorgt andererseits bei in Betrieb befindlicher Verbrennungskraftmaschine 2 für eine Entkopplung der im Bereich der Verbrennungskraftmaschine 2 vorliegenden Drehschwingungen von der Rotorwelle 7 der Elektromaschine 3.

Der Aufbau erlaubt es so erstmals eine integrierte Antriebseinheit 4 zu schaffen, welche insbesondere so ausgebildet ist, dass die Drehachse der Kurbelwelle der Verbrennungskraftmaschine 2 und die Drehachse der Rotorwelle 7 parallel zueinander verlaufen. Insbesondere sind Verbrennungskraftmaschine 2 und Elektromaschine 3 dabei integriert oder miteinander verbunden ausgeführt, sodass letztlich eine kompakte universelle Antriebseinheit 4 entsteht. Diese Antriebseinheit 4 bietet entscheidende Vorteile, da diese vom Rest der Antriebsvorrichtung 1, insbesondere also von der Getriebeeinrichtung 10 und den durch diese angetriebenen Komponenten als lediglich eine einzige Antriebseinheit 4 wahrgenommen wird. Die Antriebseinheit 4 kann dabei vergleichsweise frei so betrieben werden, dass sich im Bereich der gemeinsamen Abtriebswelle 5 eine vorgegebene Kennlinie für Leistung und/oder Drehmoment einstellt, ohne dass die Hybridisierung der Antriebsvorrichtung 1 bei der Auslegung der nachfolgenden Komponenten zwingend berücksichtigt werden muss. Vielmehr ist es möglich, über ein Steuergerät 14 und eine entsprechende Ansteuerung der Elektromaschine 3 und der Verbrennungskraftmaschine 2 bei freier Aufteilung der Leistung zwischen diesen beiden Maschinen 2, 3 das gewünschte Drehmoment beziehungsweise die gewünschte Leistung im Bereich der gemeinsamen Abtriebswelle 5 zur Verfügung zu stellen. Die Aufteilung der Leistung, welche maximal selbstverständlich so groß sein kann wie die Summe der Maximalleistungen der beiden Maschinen 2, 3 bei der jeweiligen Drehzahl, lässt sich dabei vergleichsweise frei aufteilen. Hier kann beispielsweise ein Ladezustand des elektrischen Energiespeichers 8 mit berücksichtigt werden, um einen möglichst energieeffizienten Betrieb der integrierten Antriebseinheit 4 zu gewährleisten. Ergänzend oder alternativ hierzu kann außerdem die Dynamik in der Anforderung des angeforderten Drehmoments berücksichtigt werden, da typischerweise über die elektrische Maschine 3 sehr viel schneller eine schlagartige Drehmomentsteigerung möglich ist, als über die Verbrennungskraftmaschine 2, sodass in diesem Fall die geforderte Leistungsbeziehungsweise Drehmomentkennlinie an der gemeinsamen Abtriebswelle 5 so realisiert werden kann, dass zuerst das Drehmoment relativ schnell über die elektrische Maschine 3 erhöht wird und dann in Abhängigkeit der Ladung des Energiespeichers 8 oder auch unabhängig hiervon eine Erzeugung des Drehmoments oder eines Teils des Drehmoments durch die Verbrennungskraftmaschine 2 erfolgt. Die Aufteilung der Leistungen und die Betriebsweise der Antriebseinheit 4 muss vom Rest der Antriebsvorrichtung 1 nicht berücksichtigt werden. Beide Teilbereiche sind unabhängig voneinander steuerbar.

Der typische Aufbau ist in der Darstellung der Figur 1 in einer sehr einfachen Ausführungsform dargestellt. Über das Steuergerät 14 wird im Allgemeinen eine Drehmomentanforderung erhalten, welche typischerweise das Drehmoment im Bereich der Abtriebswelle 11 der Getriebeeinrichtung 10 betrifft. Diese wird entweder in der elektrischen Steuereinrichtung 14 oder über ein eigenes Getriebesteuergerät entsprechend umgeformt, sodass der Steuereinrichtung 14 letztlich ein Soll-Eingangsdrehmoment der Getriebeeinrichtung 10 im Bereich der Eingangswelle 9 zur Verfügung gestellt wird. Dieses Drehmoment ist in der Darstellung der Figur 1 und 2 mit der Bezeichnung Tₛₒₗₗ bezeichnet. Ausgehend von diesem Sollmoment wird zumindest die Verbrennungskraftmaschine 2 und die elektrische Maschine 3 entsprechend angesteuert um dieses Sollmoment im Bereich der gemeinsamen Abtriebswelle 5 bereitzustellen.

In der Darstellung der Figur 1 ist zu erkennen, dass außerdem eine Ansteuerung der hydrodynamischen Kupplung 13 erfolgen kann. Diese kann beispielsweise als Regelkupplung oder als in ihrem Füllstand variierbare Kupplung ausgebildet sein. In diesem Fall kann die Leistungsübertragung zusätzlich beeinflusst werden, beispielsweise durch einen Stelldruck, welcher den Füllgrad der hydrodynamischen Kupplung 13 bestimmt und damit unmittelbar Einfluss auf die Leistungsübertragung zwischen der elektrischen Maschine 3 und der gemeinsamen Abtriebswelle 5, welche über das Getriebeelement 6 miteinander gekoppelt sind, gewährleistet. Der Aufbau hat dabei den Vorteil, dass bei einer vollkommen entleerten hydrodynamischen Kupplung 13 automatisch eine Abkopplung der elektrischen Maschine 3 erfolgt, sodass diese unabhängig von ihrer Bauart ohne Leistungsverluste ist.

In der bevorzugten Bauart ist die elektrische Maschine 3 jedoch als Asynchronmaschine ausgebildet. In diesem Fall lässt sich durch eine Abmagnetisierung ein Umlaufen ohne Leistungsverluste auch dann erreichen, wenn die hydrodynamische Kupplung 13 befüllt bleibt.

Der in Figur 1 dargestellte Aufbau der Antriebsvorrichtung 1 erlaubt es dabei, wie bei hybridisierten Antriebsvorrichtungen 1 üblich, eine maximale Leistung bereitzustellen, welche sich aus der Summe der maximalen Leistung der Verbrennungskraftmaschine 2 und der Elektromaschine 3 im jeweiligen Betriebspunkt ergibt. Alternativ oder ergänzend dazu ist der Antrieb der gemeinsamen Abtriebswelle 5 jeweils über eine der beiden Maschinen 2, 3 alleine ebenso denkbar. Für den Fall, dass die Getriebeeinrichtung 10 beziehungsweise die Abtriebswelle 11 der Getriebeeinrichtung 10 abgebremst werden soll, ist es insbesondere auch möglich, neben dem durch die Verbrennungskraftmaschine 2 auftretenden Schleppmoment die elektrische Maschine 3 generatorisch zu betreiben und so durch eine Leistungsentnahme und ein Einspeichern der entnommenen elektrischen Leistung in der Energiespeichereinrichtung 8 ein Bremsmoment zu erzeugen und die Bremsenergie durch Rekuperation vorteilhaft zu nutzen. Da bei dem in Figur 1 dargestellten Aufbau kein Abkoppeln der Verbrennungskraftmaschine 2 von der gemeinsamen Abtriebswelle 5 möglich ist, müsste diese beim Bremsen immer mitgeschleppt werden, sodass auch hierdurch ein gewisses Bremsmoment entsteht und nicht das gesamte zur Verfügung stehende Bremsmoment in elektrische Energie umgewandelt werden kann.

Eine alternative Ausführungsform der Antriebsvorrichtung 1 ist in der Darstellung der Figur 2 zu erkennen. Das Getriebeelement 6 weist in diesem Ausführungsbeispiel lediglich zwei Zahnräder 6.1 und 6.2 auf, ansonsten ist die Funktionalität in diesem Bereich dieselbe. Wie auch bei dem Getriebeelement 6 in der Darstellung der Figur 1 ist dabei die Übersetzung des Getriebeelements 6 so gewählt, dass die Elektromaschine 3 schneller läuft als die Verbrennungskraftmaschine 2. Dies ist aufgrund der bei Elektromaschinen, und hier insbesondere bei Asynchronmaschinen üblichen Drehzahlen sinnvoll, um bei minimaler Baugröße die gewünschten Leistungen zu realisieren. Der in der Darstellung der Figur 2 erkennbare Aufbau unterscheidet sich ansonsten von dem in Figur 1 dargestellten Aufbau außerdem durch eine Reibkupplung 15 sowie eine Überbrückungskupplung 16. Die Reibkupplung 15 ist im Bereich zwischen der gemeinsamen Abtriebswelle 5 und der Kurbelwelle der Verbrennungskraftmaschine 2 angeordnet und erlaubt es, die Verbrennungskraftmaschine 2 von der gemeinsamen Abtriebswelle 5 beziehungsweise der Getriebeeinheit 6 abzukoppeln. Dies ermöglicht einen rein elektrischen Antrieb über die Elektromaschine 3, ohne dass die Verbrennungskraftmaschine 2 geschleppt werden muss, und erlaubt es außerdem über die elektrische Maschine 3 die Antriebsvorrichtung 1 abzubremsen, ohne dass Bremsleistung durch ein Schleppen der Verbrennungskraftmaschine 2 bereitgestellt wird. Damit lässt sich eine größere Menge an Energie beim Abbremsen durch die elektrische Maschine 3 im generatorischen Betrieb in den Bereich der Energiespeichereinrichtung 8 einspeichern.

Die hydrodynamische Kupplung 13 hat, wie oben bereits erwähnt, die Aufgabe, eine Entkopplung von Drehschwingungen zwischen der Verbrennungskraftmaschine 2 und der Elektromaschine 3 zu realisieren. In Situationen, in denen die Verbrennungskraftmaschine 2 nicht betrieben wird oder in der speziellen Ausführungsform gemäß Figur 2 über die Reibkupplung 15 abgekoppelt ist, ist die hydrodynamische Kupplung 13 nicht notwendig. Da die hydrodynamische Kupplung 13 mehr Leistungsverluste verursacht als eine direkte Verbindung der Wellen, ist deshalb eine Überbrückungskupplung 16 in Form einer weiteren Reibkupplung, beispielsweise im Bereich der hydrodynamischen Kupplung 13, integriert oder auch in einem parallelen Leistungszweig hierzu (nicht dargestellt) vorgesehen. Die Überbrückungskupplung kann immer dann geschlossen werden, wenn die Beeinträchtigung der elektrischen Maschine 3 durch Drehschwingungen nicht zu befürchten ist, und erhöht dann den Wirkungsgrad der Leistungsübertragung, da eine geschlossene Reibkupplung einen höheren Wirkungsgrad realisiert als die hydrodynamische Kupplung 13. Ansonsten ist der in Figur 2 dargestellte Aufbau in seiner Funktionalität analog zu dem in Figur 1 dargestellten Aufbau zu verstehen. Die zusätzlichen Elemente der Reibkupplung 15 und der Überbrückungskupplung 16 ließen sich dabei einzeln oder gemeinsam auch in den Aufbau, wie er in Figur 1 dargestellt ist, integrieren.

Auch bei dem in Figur 2 dargestellten Aufbau liefert die integrierte Antriebseinheit 4 als universeller Antrieb bei freier Aufteilung der Leistungen zwischen der elektrischen Maschine 3 und der Verbrennungskraftmaschine 2 eine in weiten Grenzen frei wählbare Kennlinie von Leistung beziehungsweise Drehmoment im Bereich der gemeinsamen Abtriebswelle 5 und erlaubt es so, die Aufteilung insbesondere hinsichtlich Energieeffizienz so auszubilden, dass die Antriebsvorrichtung 1 bei gleichen Antriebsbedingungen im Bereich der Abtriebswelle 11 über ihre Betriebsdauer hinweg eine große Menge an Energie einspart.

## Patentansprüche

1. Antriebsvorrichtung (1) mit
einer Verbrennungskraftmaschine (2) mit einer Kurbelwelle;
einer elektrischen Maschine (3) mit einem auf einer Rotorwelle (7) umlaufenden Rotor;
einer Getriebeeinrichtung (10); wobei
die Drehachse der Kurbelwelle und die Drehachse des Rotors parallel nebeneinander angeordnet sind; wobei
die Elektromaschine (3) und die Verbrennungskraftmaschine (2) über ein Getriebeelement (6) miteinander verbunden sind, wobei
die Elektromaschine (3) und die Verbrennungskraftmaschine (2) außerhalb der Getriebeeinrichtung (10) positioniert sind;
die Elektromaschine (3) und die Verbrennungskraftmaschine (2) eine gemeinsame, mit dem Getriebeelement (6) verbundene Abtriebswelle (5) aufweisen, welche mit einer Eingangswelle (9) der Getriebeeinrichtung (10) verbunden oder verbindbar ist, wobei die gemeinsame Abtriebswelle (5) in Richtung des Antriebsleistungsflusses von der Verbrennungskraftmaschine (2) zur Getriebeeinrichtung (10) vor oder zusammen mit der Eingangswelle (9) positioniert ist, **dadurch gekennzeichnet, dass**
zwischen der Rotorwelle (7) der elektrischen Maschine (3) und der gemeinsamen Abtriebswelle (5) eine hydrodynamische Kupplung (13) angeordnet ist.

2. Antriebsvorrichtung nach Anspruch 1, **dadurch gekennzeichnet, dass** zwischen der gemeinsamen Abtriebswelle (5) und der Eingangswelle (9) der Getriebeeinrichtung (10) ein Drehschwingungsdämpfer (12) angeordnet ist.

3. Antriebsvorrichtung nach Anspruch 1 oder 2, **dadurch gekennzeichnet, dass** die hydrodynamische Kupplung (13) als hydrodynamische Kupplung mit variablem Füllstand ausgebildet ist.

4. Antriebsvorrichtung nach Anspruch 1, 2 oder 3, **dadurch gekennzeichnet, dass** eine mechanische Überbrückungskupplung (16) zum Überbrücken der hydrodynamischen Kupplung (13) vorgesehen ist.

5. Antriebsvorrichtung nach einem der Ansprüche 1 bis 4, **dadurch gekennzeichnet, dass** das Getriebeelement (6), wenigstens zwei Zahnräder (6.1, 6.2, 6.3) aufweist.

6. Antriebsvorrichtung nach einem der Ansprüche 1 bis 5, **dadurch gekennzeichnet, dass** die elektrische Maschine (3) als Asynchronmaschine ausgebildet ist.

7. Antriebsvorrichtung nach einem der Ansprüche 1 bis 6, **dadurch gekennzeichnet, dass** zwischen der Kurbelwelle der Verbrennungskraftmaschine (2) und der gemeinsamen Abtriebswelle (5) eine Reibkupplung (15) vorgesehen ist.

8. Antriebsvorrichtung nach einem der Ansprüche 1 bis 7, **dadurch gekennzeichnet, dass** das Getriebeelement (6) so ausgebildet ist, dass sich ein Verhältnis der Drehzahl der elektrischen Maschine (3) zur Drehzahl der Verbrennungskraftmaschine (2) ergibt, welches größer als 1 ist.

9. Antriebsvorrichtung nach einem der Ansprüche 1 bis 8, **dadurch gekennzeichnet, dass** die Getriebeeinrichtung (10) als Differentialwandlergetriebe ausgebildet ist.

10. Verfahren zum Betreiben einer Antriebsvorrichtung (1) nach einem der Ansprüche 1 bis 9, **dadurch gekennzeichnet, dass**
aus einem angeforderten Drehmoment ein Soll-Eingangsdrehmoment (Tₛₒₗₗ) für die Getriebeeinrichtung (10) bestimmt wird, wonach
Verbrennungskraftmaschine (2) und elektrische Maschine (3) dieses Soll-Eingangsdrehmoment (Tₛₒₗₗ) im Bereich der gemeinsamen Abtriebswelle (5) gemeinsam liefern, wobei
die Aufteilung der Drehmoment-Erzeugung zwischen der elektrischen Maschine (3) und der Verbrennungskraftmaschine (2) frei wählbar ist.

11. Verfahren nach Anspruch 10, **dadurch gekennzeichnet, dass** die Aufteilung der Drehmoment-Erzeugung wenigstens mittelbar in Abhängigkeit wenigstens eines der folgenden Parameter erfolgt:
Speicherinhalt einer elektrischen Energiespeichereinrichtung (8);
Dynamik der Anforderung des Drehmoments;
Wirkungsgradkennfeld der Verbrennungskraftmaschine (2) und/oder der elektrischen Maschine (3);
Anforderungen an Schadstoff- und/oder Geräuschemissionen;
Angefordertes Bremsmoment.

## Claims

1. Drive device (1) having
an internal combustion engine (2) with a crankshaft;
an electric machine (3) with a rotor which rotates on a rotor shaft (7);
a gearbox device (10); wherein
the rotational axis of the crankshaft and the rotational axis of the rotor are arranged one next to the other in parallel; wherein
the electric machine (3) and the internal combustion engine (2) are connected to one another by means of a gearbox element (6), whereas the electric machine (3) and the internal combustion engine (2) are positioned outside the gearbox device (10);
the electric machine (3) and the internal combustion engine (2) have a common output shaft (5) which is connected to the gearbox element (6) and which is connected or can be connected to an input shaft (9) of the gearbox device (10), wherein the common output shaft (5) is positioned upstream of, or together with, the input shaft (9) in the direction of the drive power flux from the internal combustion engine (2) to the gearbox device (10), **characterized in that**
a hydrodynamic clutch (13) is arranged between the rotor shaft (7) of the electric machine (3) and the common output shaft (5).

2. The drive device according to claim 1, **characterized in that** a torsional vibration damper (12) is arranged between the common output shaft (5) and the input shaft (9) of the gearbox device (10).

3. The drive device according to claim 1 or 2, **characterized in that** the hydrodynamic clutch (13) is configured as a hydrodynamic clutch with variable filling level.

4. The drive device according to claim 1, 2 or 3, **characterized in that** a mechanical bridging clutch (16) is provided for bridging the hydrodynamic clutch (13).

5. The drive device according to one of claims 1 to 4, **characterized in that** the gearbox element (6) has at least two gear wheels (6.1, 6.2, 6.3).

6. The drive device according to one of claims 1 to 5, **characterized in that** the electric machine (3) is configured as an asynchronous machine.

7. The drive device according to one of claims 1 to 6, **characterized in that** a friction clutch (15) is provided between the crankshaft of the internal combustion engine (2) and the common output shaft (5).

8. The drive device according to one of claims 1 to 7, **characterized in that** the gearbox element (6) is configured so that a ratio of the rotational speed of the electric machine (3) to the rotational speed of the internal combustion engine (2) is obtained which is greater than 1.

9. The drive device according to one of claims 1 to 8, **characterized in that** the gearbox device (10) is configured as a differential converter gearbox.

10. Method for operating a drive device (1) according to one of claims 1 to 9, **characterized in that**
a desired input torque (Tₛₒₗₗ) for the gearbox device (10) is determined from a required torque, whereby
internal combustion engine (2) and electric machine (3) should jointly deliver this desired input torque (Tₛₒₗₗ) in the region of the common output shaft (5), wherein
the division of the torque production between the electric machine (3) and the internal combustion engine (2) can be freely selected.

11. The method according to claim 10, **characterized in that** the division of the torque production is accomplished at least indirectly as a function of at least one of the following parameters:
storage content of an electrical energy storage device (8);
dynamics of the torque requirement;
efficiency characteristic map of the internal combustion engine (2) and/or
the electric machine (3);
requirements for pollutant and/or noise emissions;
required braking torque.

## Revendications

1. Dispositif d'entraînement (1) ayant
un moteur à combustion interne (2) comportant un vilebrequin ;
un moteur électrique (3) possédant un rotor tournant (7) sur un arbre de rotor ;
un mécanisme de transmission (10) ; où
l'axe de rotation du vilebrequin et l'axe de rotation du rotor sont disposés parallèles l'un à l'autre ; où
le moteur électrique (3) et le moteur à combustion interne (2) sont reliés entre eux par un élément de transmission (6), où
le moteur électrique (3) et le moteur à combustion interne (2) sont positionnés à l'extérieur du mécanisme de transmission (10) ;
le moteur électrique (3) et le moteur à combustion interne (2) présente un arbre de sortie commun (5), relié à l'élément de transmission (6), arbre de sortie relié ou pouvant être relié à un arbre d'entrée (9) du mécanisme de transmission (10), où l'arbre de sortie commun (5) est positionné en amont ou avec arbre d'entrée (9) dans le sens du flux de puissance d'entraînement allant du moteur à combustion interne (2) vers le mécanisme de transmission (10), **caractérisé en ce**
**qu'**un embrayage hydrodynamique (13) est agencé entre l'arbre de rotor (7) du moteur électrique (3) et l'arbre de sortie commun (5).

2. Dispositif d'entraînement selon la revendication 1, **caractérisé en ce qu'**un amortisseur de vibrations torsionelles (12) est agencé entre l'arbre de sortie commun (5) et arbre d'entrée (9) du mécanisme de transmission (10).

3. Dispositif d'entraînement selon la revendication 1 ou 2, **caractérisé en ce que** l'embrayage hydrodynamique (13) est sous forme d'embrayage hydrodynamique avec niveau de remplissage variable.

4. Dispositif d'entraînement selon la revendication 1, 2 ou 3, **caractérisé en ce qu'**un embrayage hydrodynamique mécanique (16) est prévu pour assurer le pontage de l'embrayage hydrodynamique (13).

5. Dispositif d'entraînement selon l'une des revendications 1 à 4, **caractérisé en ce que** l'élément de transmission (6) présente au moins deux roues dentées (6.1, 6.2, 6.3).

6. Dispositif d'entraînement selon l'une des revendications 1 à 5, **caractérisé en ce que** le moteur électrique (3) prend la forme de moteur asynchrone.

7. Dispositif d'entraînement selon l'une des revendications 1 à 6, **caractérisé en ce qu'**un embrayage à friction (15) est prévu entre le vilebrequin du moteur à combustion interne (2) et l'arbre de sortie commun (5).

8. Dispositif d'entraînement selon l'une des revendications 1 à 7, **caractérisé en ce que** l'élément de transmission (6) est conçu de telle sorte que l'on obtient un rapport de la vitesse de rotation du moteur électrique (3) à la vitesse de rotation du moteur à combustion interne (2), qui est supérieure à 1.

9. Dispositif d'entraînement selon l'une des revendications 1 à 8, **caractérisé en ce que** le mécanisme de transmission (10) est sous forme de convertisseur différentiel.

10. Procédé d'utilisation d'un dispositif d'entraînement (1) selon l'une des revendications 1 à 9, **caractérisé en ce que** l'on définit un couple d'entrée de consigne (Tsoll) pour le mécanisme de transmission (10) à partir du couple de rotation demandé, en fonction de quoi le moteur à combustion interne (2) et le moteur électrique (3) fournissent ensemble ce couple d'entrée de consigne (Tsoll) dans la zone de l'arbre de sortie commun (5), où
la répartition de la production du couple de rotation peut être sélectionnée sans entraves entre le moteur électrique (3) et le moteur à combustion interne (2).

11. Procédé selon la revendication 10, **caractérisé en ce que** la répartition de la production du couple de rotation s'effectue au moins indirectement en fonction d'au moins de l'un des paramètres suivants:
contenu mémoire d'un dispositif de stockage d'énergie électrique (8) ;
dynamique de l'exigence du couple de rotation ;
champ caractéristique de degré d'efficacité du moteur à combustion interne (2) et/ou du moteur électrique (3) ;
exigences en termes d'émissions de polluant et/ou de bruit ;
couple de freinage exigé.
